# DEMANDE DE BREVET EUROPEEN

(11) **EP 2 725 876 A1**
(43) Date de publication de la demande: **30.04.2014**
(21) Numéro de dépôt: 13189176.4
(22) Date de dépôt: 17.10.2013
(51) Int. Cl.: H05B 33/08, B60L 1/14, B60Q 1/00

(54) **Dispositif de connexion électrique d'un projecteur**

(30) Priorité: 26.10.2012 FR 1260241
(71) Demandeur: VALEO ILUMINACION,, 23600 Martos (ES)
(72) Inventeur: Marin Gonzalez, Maria, 23600 MARTOS (ES); Illan Cabeza, Antonio, 23600 MARTOS (ES); Lara Cabeza, Juan, 23600 MARTOS (ES); Nicolas Mariscal, Rafael, 23001 JAEN (ES)

(57) **Abrégé**

Dispositif de connexion électrique pour la connexion entre une unité (M) de commande électronique et un projecteur de véhicule automobile, l'unité de commande électronique comportant au moins une sortie (Mc) de commande et une sortie (Mp) d'alimentation de puissance, le projecteur comportant au moins un premier module (1) comportant un premier circuit pilote (11) présentant au moins une entrée de puissance (1 p), le premier module (1) étant apte à générer une première fonction lumineuse et un deuxième module (2) comportant un deuxième circuit pilote (21) présentant au moins une entrée de puissance (2p) et une entrée de commande (2c), le deuxième module étant apte à générer sélectivement au moins une deuxième fonction lumineuse, les premier (11) et deuxième (21) circuits pilotes étant destinés à être commandés par l'unité (M) de commande électronique, le dispositif de connexion électrique étant caractérisé en ce qu'il comporte au moins :
- une ligne d'alimentation de puissance (Lp) destinée à connecter la sortie (Mp) d'alimentation de puissance de l'unité (M) de commande électronique à l'entrée de puissance (1 p) du premier circuit pilote (11) et à l'entrée de puissance (2p) du deuxième circuit pilote (21) ; et
- une première ligne de commande (Lc) destinée à connecter la sortie (Mc) de commande de l'unité de commande électronique (M) à l'entrée de commande (2c) du deuxième circuit pilote (2).

## Description

L'invention est relative à un dispositif de connexion électrique d'un projecteur, notamment un projecteur avant, de véhicule automobile.

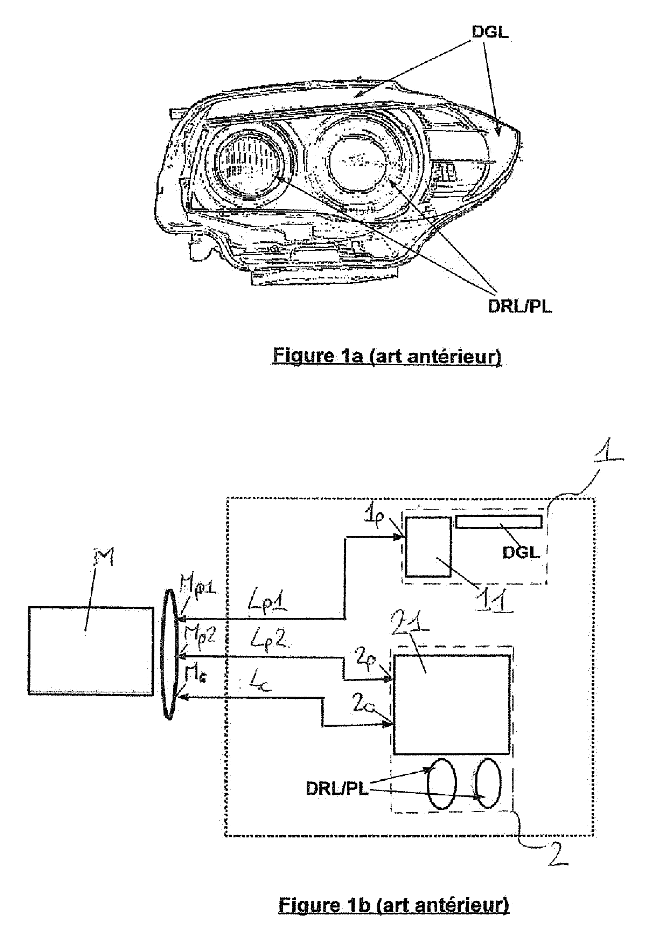

Les projecteurs des véhicules automobiles modernes actuels comportent, le plus souvent, ainsi que représenté sur la figure 1a, un premier module 1 apte à générer une fonction lumineuse dite de style telle que, par exemple, un feu de sourcil, désignée en tant que telle en référence à la désignation «eyebrows» en anglais. Cette fonction et le module correspondant sont encore désignés DGL pour Design Guide Line en anglais, dans la mesure où le feu de sourcil DGL précité permet l'implémentation d'une signature de type, propre au constructeur du véhicule automobile.

Outre la fonction de style feu de sourcil précitée, les projecteurs actuels comportent généralement au moins un deuxième module 2 apte à réaliser sélectivement deux fonctions d'éclairage et/ou de signalisation telle qu'un feu de position diurne DRL pour Day Running Light et un feu de position PL.

Le module DRL/PL peut être agencé sous la forme d'anneaux adjacents selon la direction du plan de symétrie horizontal du projecteur, ainsi que représenté en figure 1a.

Pour assurer le pilotage des projecteurs précités, l'architecture de pilotage utilisée actuellement comporte, habituellement, ainsi que représenté en figure 1b, une unité M de commande électronique agencé pour commander l'émission de l'une des fonctions d'éclairage/signalisation DRL ou PL par le module 2 et l'émission de la fonction de style DGL par le module 1.

Usuellement, l'unité M comporte au moins :
- une sortie d'alimentation électrique Mp1 du module 1, connectée à une entrée 1 p d'un circuit pilote 11 du module 1,
- une sortie d'alimentation électrique Mp2 du module 2, connectée à une entrée 2p d'un circuit pilote 21 du module 2,
- et une sortie Mc de commande du module 2 connectée à une entrée 2c du circuit pilote 21 du module 2.

La sortie Mc délivre ainsi sur la ligne de commande Lc un signal de commutation entre la fonction des feux de jour DRL et la fonction des feux de position PL.

Avec l'évolution continue des normes et règlements relatifs aux fonctions d'éclairage/signalisation des véhicules automobiles et l'apparition constante de nouvelles fonctions régulant l'implémentation de ces dernières, il est apparu opportun de simplifier, ou à tout le moins de réduire, le nombre de lignes de connexion assurant la liaison entre l'unité M de commande électronique et les circuits pilotes 11 et 21 du projecteur, dans le but de libérer, notamment, une des sorties de l'unité M de commande électronique, tout en conservant la totalité des fonctionnalités d'un projecteur classique, comme par exemple la sélection d'une fonction d'éclairage et/ou de signalisation ou encore la détection et la gestion des défaillances.

L'invention a notamment pour but de résoudre le problème précité.

L'invention a donc pour objet un dispositif de connexion électrique pour la connexion entre une unité de commande électronique et un projecteur de véhicule automobile, l'unité de commande électronique comportant au moins une sortie de commande et une sortie d'alimentation de puissance, le projecteur comportant au moins un premier module comportant un premier circuit pilote présentant au moins une entrée de puissance, le premier module étant apte à générer une première fonction lumineuse et un deuxième module comportant un deuxième circuit pilote présentant au moins une entrée de puissance et une entrée de commande, le deuxième module étant apte à générer sélectivement au moins une deuxième fonction lumineuse, les premier et deuxième circuits pilotes étant destinés à être commandés par l'unité de commande électronique, le dispositif de connexion électrique comportant au moins :
- une ligne d'alimentation de puissance destinée à connecter la sortie d'alimentation de puissance de l'unité de commande électronique à l'entrée de puissance du premier circuit pilote et à l'entrée de puissance du deuxième circuit pilote; et
- une première ligne de commande destinée à connecter la sortie de commande de l'unité de commande électronique à l'entrée de commande du deuxième circuit pilote.

La ligne d'alimentation de puissance permet d'assurer le partage de l'alimentation de puissance délivré par l'unité de commande électronique entre le circuit pilote du premier module et entre le circuit pilote du deuxième module.

Le dispositif de connexion électrique selon l'invention permet donc d'utiliser seulement deux sorties d'une unité de commande pour piloter un projecteur.

Avantageusement, le premier circuit pilote présentant une entrée de commande et le deuxième circuit pilote présentant une sortie de commande, le dispositif de connexion comporte une deuxième ligne de commande destinée à connecter l'entrée de commande du premier circuit pilote à la sortie de commande du deuxième circuit pilote.

Cette deuxième ligne de commande offre l'avantage de permettre la mise en oeuvre de la totalité des fonctionnalités d'un projecteur classique, notamment la gestion du projecteur en cas de défaillance.

L'invention a également pour objet un dispositif de pilotage destiné à piloter un projecteur de véhicule, ce dispositif comportant :
- une unité de commande électronique, et
- un dispositif de connexion électrique selon l'invention.

Le dispositif de pilotage selon l'invention pourra en outre présenter, de manière facultative, au moins l'une des caractéristiques suivantes :
- le dispositif de pilotage comporte des moyens de diagnostic apte à diagnostiquer une défaillance du deuxième module, notamment d'une défaillance d'un composant électrique du deuxième module,
- les moyens de diagnostic sont intégrés à l'unité de commande électronique,
- les moyens de diagnostic sont agencés pour diagnostiquer une défaillance du deuxième module en comparant une valeur caractéristique, notamment une intensité, du courant d'alimentation circulant dans la ligne d'alimentation de puissance à au moins une valeur de référence spécifique,
- les moyens de diagnostic sont agencés pour diagnostiquer une défaillance du deuxième module lorsque l'intensité du courant d'alimentation circulant dans la ligne d'alimentation de puissance est inférieure à une valeur seuil, notamment à 25 mA,

On entend notamment par « défaillance d'un composant électrique du deuxième module » la défaillance d'au moins un composant de ce module, par exemple d'une diode électroluminescente de ce module ou encore du circuit pilote de ce module.

L'invention a encore pour objet un projecteur de véhicule automobile comportant :
- un premier module comportant un premier circuit pilote présentant au moins une entrée de puissance, le premier module étant apte à générer une première fonction lumineuse,
- un deuxième module comportant un deuxième circuit pilote présentant au moins une entrée de puissance et une entrée de commande, le deuxième module étant apte à générer sélectivement au moins une deuxième fonction lumineuse, et
- un dispositif de connexion électrique selon l'invention, ce dispositif de connexion étant connecté aux premier et deuxième modules.

Ainsi, le premier module génère la première fonction lumineuse lorsqu'il est alimenté électriquement par la ligne d'alimentation de puissance.

Le deuxième module émet la deuxième fonction lorsqu'il est alimenté électriquement par la ligne d'alimentation de puissance et qu'un signal commandant l'émission de la deuxième fonction émis par l'unité de commande circule sur la première ligne de commande.

Le projecteur selon l'invention pourra en outre présenter, de manière facultative, au moins l'une des caractéristiques suivantes :
- le projecteur comporte des moyens de gestion destinés à désactiver le premier module lorsqu'il est diagnostiqué une défaillance du deuxième module, notamment par interruption de l'alimentation électrique du premier module,
- les moyens de gestion sont intégrés au deuxième circuit pilote du deuxième module,
- le premier circuit pilote présentant une entrée de commande, le deuxième circuit pilote présentant une sortie de commande et le dispositif de connexion électrique comportant une deuxième ligne de commande reliant l'entrée du premier circuit pilote à la sortie du deuxième circuit pilote, les moyens de gestion sont aptes à générer une chute de tension sur la deuxième ligne de commande lorsqu'il est diagnostiqué une défaillance du deuxième module,
- le premier circuit pilote du premier module comporte au moins :
   - un circuit régulateur de courant (REG) comportant une entrée de modulation d'impulsions ;
   - une ligne de connexion entre à l'entrée de commande du premier circuit pilote et l'entrée de modulation d'impulsions du régulateur, la chute de tension sur la ligne de diagnostic (DL) provoquant la désactivation du deuxième module, notamment par interruption de l'alimentation électrique du deuxième module,
- le projecteur comporte une unité de commande électronique connectée au dispositif de connexion électrique,
- le premier module et/ou le deuxième module comporte au moins une diode électroluminescente,
- la première fonction lumineuse est une fonction de style,
- la deuxième fonction lumineuse est une fonction d'éclairage et/ou de signalisation prédéterminée, notamment un feu de position diurne ou DRL,
- le deuxième module est apte à générer sélectivement une troisième fonction lumineuse, cette troisième fonction étant une fonction d'éclairage et/ou de signalisation prédéterminée, distincte de la deuxième fonction lumineuse, notamment un feu de position,

De cette manière, le deuxième module émet la troisième fonction lorsqu'il est alimenté électriquement par la ligne d'alimentation de puissance et qu'un signal commandant l'émission de la troisième fonction émis par l'unité de commande circule sur la première ligne de commande.

On entend par fonction de style une fonction esthétique ne remplissant aucune fonction photométrique.

On entend notamment par « désactivation d'un module » la désactivation de l'émission de lumière de ce module.

Le dispositif de connexion électrique, le dispositif de pilotage et le projecteur, objets de l'invention, seront mieux compris à la lecture de la description ci-après et à l'observation des dessins dans lesquels, outre les figures 1a et 1b relatives à l'art antérieur :
- la figure 2 représente un schéma fonctionnel préférentiel non limitatif d'un projecteur, conforme à l'objet de la présente invention ;
- la figure 3 représente, à titre non limitatif, de manière plus détaillée le projecteur de la figure 2 ;
- la figure 4 représente, à titre non limitatif, un détail d'exécution du dispositif de connexion du projecteur de la figure 3 ;
- la figure 5 représente, à titre non limitatif, un schéma complet d'exécution du premier module du projecteur de la figure 3.

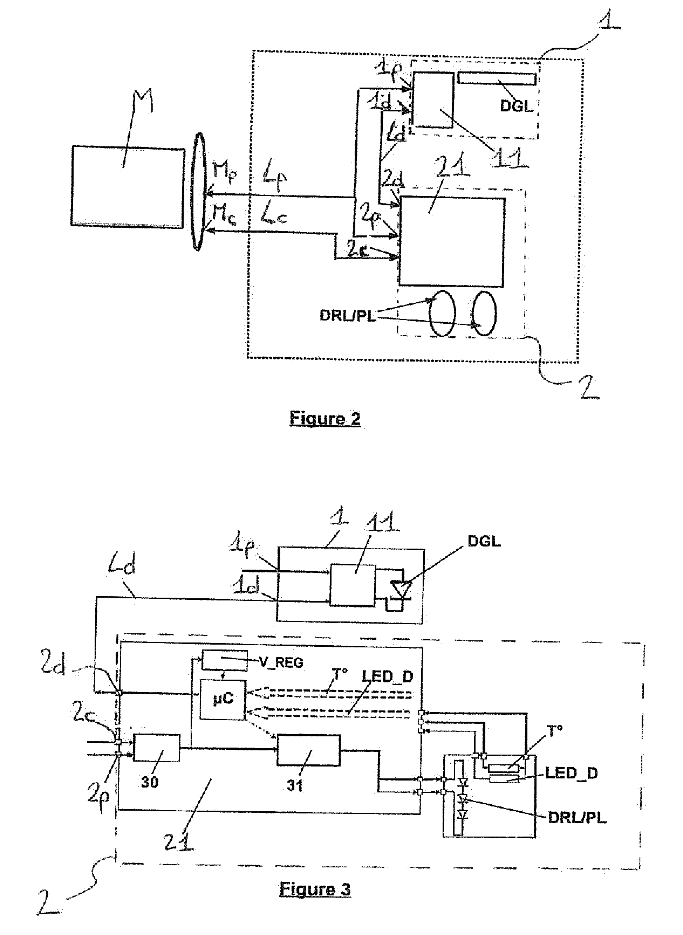

Une description plus détaillée d'un projecteur de véhicule automobile, conforme à l'objet de la présente invention, sera maintenant donnée en liaison avec la figure 2 et les figures suivantes.

Le projecteur de véhicule automobile comporte au moins un premier module 1 apte à générer une première fonction lumineuse DGL et un deuxième module 2 apte à générer sélectivement une deuxième fonction lumineuse DRL ou une troisième fonction lumineuse PL. Le projecteur est commandé par une unité M de commande électronique.

Dans un but de compatibilité totale descendante avec les véhicules modernes actuels, non encore équipés d'un dispositif de connexion électrique d'un projecteur de véhicule automobile, conforme à l'objet de la présente invention, l'unité M de commande électronique est identique à celle décrit avec la figure 1b. L'unité M comporte ainsi une sortie Mc de commande, une sortie Mp d'alimentation de puissance et une autre sortie d'alimentation de puissance, non représentée.

Le premier module 1 comporte un premier circuit pilote 11 présentant au moins une entrée de puissance 1 p.

Le deuxième module 2 comporte un deuxième circuit pilote 21 présente une entrée de puissance 2p et une entrée de commande 2c.

Le dispositif de connexion comporte :
- une ligne d'alimentation de puissance Lp destinée à connecter la sortie Mp d'alimentation de puissance de l'unité M de commande électronique à l'entrée de puissance 1 p du premier circuit pilote 11 et à l'entrée de puissance 2p du deuxième circuit pilote 21 ; et
- une première ligne de commande Lc reliant la sortie Mc de commande de l'unité M de commande électronique à l'entrée de commande 2c du deuxième circuit pilote 2.

Cette ligne d'alimentation Lp partagée permet en fait d'assurer le partage de l'alimentation de puissance délivré par l'unité M de commande électronique entre le circuit pilote 11 du premier module 1 et entre le circuit pilote 21 du deuxième module 2.

Ceci permet de libérer ainsi l'autre sortie d'alimentation électrique de l'unité M de commande électronique, référencée Mp2 en figure 1 b.

Cette sortie libérée peut alors être réaffectée à la commande de toute autre fonction d'éclairage/signalisation adaptée, par simple reprogrammation du contrôleur et/ou des microcircuits électroniques constitutifs de l'unité M de commande électronique.

Conformément à l'invention, le premier module 1 génère la première fonction lumineuse DGL lorsqu'il est alimenté électriquement par la ligne d'alimentation de puissance Lp.

Le deuxième module 2 émet la deuxième fonction DRL lorsqu'il est alimenté électriquement par la ligne d'alimentation de puissance Lp et qu'un signal commandant l'émission de la deuxième fonction DRL émis par l'unité M de commande circule sur la première ligne de commande Lc.

Le deuxième module 2 émet la deuxième fonction PL lorsqu'il est alimenté électriquement par la ligne d'alimentation de puissance Lp et qu'un signal commandant l'émission de la troisième fonction PL émis par l'unité M de commande circule sur la première ligne de commande Lc.

En outre, l'unité M de commande électronique comporte des moyens de diagnostic, non représentés, aptes à diagnostiquer une défaillance du deuxième module 2.

À titre d'exemple non limitatif, les moyens de diagnostic sont agencés pour diagnostiquer une défaillance du deuxième module 2, lorsqu'un signal commandant l'émission de la deuxième fonction DRL circule sur la première ligne de commande Lc, en comparant une intensité, du courant d'alimentation circulant dans la ligne d'alimentation de puissance Lp à au moins une valeur de référence spécifique.

Cette valeur de référence en deçà de laquelle la valeur du courant d'alimentation circulant dans la ligne Lp est en défaut peut être prise égale à 25 milliampères. Dans cette situation, l'unité M de commande électronique diagnostique de manière certaine une défaillance du deuxième module 2. Il peut être alors souhaitable que l'unité M de commande électronique déclenche un signal d'alarme, par exemple dans l'habitacle du véhicule.

Avantageusement, les moyens de diagnostic sont agencés pour comparer l'intensité du courant d'alimentation circulant dans la ligne d'alimentation de puissance Lp à une deuxième valeur de référence spécifique.

Cette deuxième valeur de référence au-delà de laquelle la valeur du courant d'alimentation délivré par la connexion partagée est sans défaut peut être prise égale à 330 milliampères. Cette valeur correspond à l'intensité du courant normalement délivré lors d'un fonctionnement correct des premier et deuxième modules.

Dans ce mode de réalisation, aucun diagnostic n'est réalisé par les moyens de diagnostic lorsqu'un signal commandant l'émission de la troisième fonction PL circule sur la première ligne de commande Lc.

Le deuxième circuit pilote 21 du deuxième module 2 comporte des moyens de gestion, non représentés, destinés à désactiver le premier module 1 lorsqu'il est diagnostiqué une défaillance du deuxième module 2, notamment par interruption de l'alimentation électrique du premier module 2.

Le premier circuit pilote 11 présente une entrée 1d de commande et le deuxième circuit pilote 21 présente une sortie 2d de commande, et le dispositif de connexion électrique comporte une deuxième ligne de commande Ld reliant cette entrée 1d à la sortie 2d du deuxième circuit pilote. Les moyens de gestion sont aptes à générer une chute de tension sur cette deuxième ligne de commande Ld lorsqu'il est diagnostiqué une défaillance du deuxième module 2.

L'existence de cette deuxième ligne de commande Ld permet l'exécution d'un processus de gestion de diagnostique des circuits pilotes 11 et 21 dans des conditions semblables à celles existant dans les architectures de connexion électrique d'un projecteur de véhicule automobile de l'art antérieur telles que représentées en figure 1 b.

On comprend, en particulier, que grâce à la compatibilité de gestion, diagnostique précitée, le dispositif de connexion électrique d'un projecteur de véhicule automobile, conforme à l'objet de la présente invention, peut donc être installée en première monte ou en deuxième monte, lors du simple remplacement d'un projecteur de véhicules automobiles, la modification de la fonction d'éclairage signalisation commandée par la sortie libre de l'unité M de commande électronique pouvant alors être exécutée par simple reprogrammation de ce module, ainsi que mentionné précédemment.

Une description plus détaillée de l'architecture matérielle, au niveau composants, du premier module 1 et du deuxième module 2 est maintenant donnée en liaison avec les figures 3, 4 et 5.

En référence à la figure 3, on indique que le premier module 1 comporte un circuit pilote 11 d'une diode électroluminescente DGL. Le circuit de commande 11 précité reçoit la ligne d'alimentation de puissance Lp sur l'entrée 1 p et la deuxième ligne de commande Ld sur l'entrée 1d.

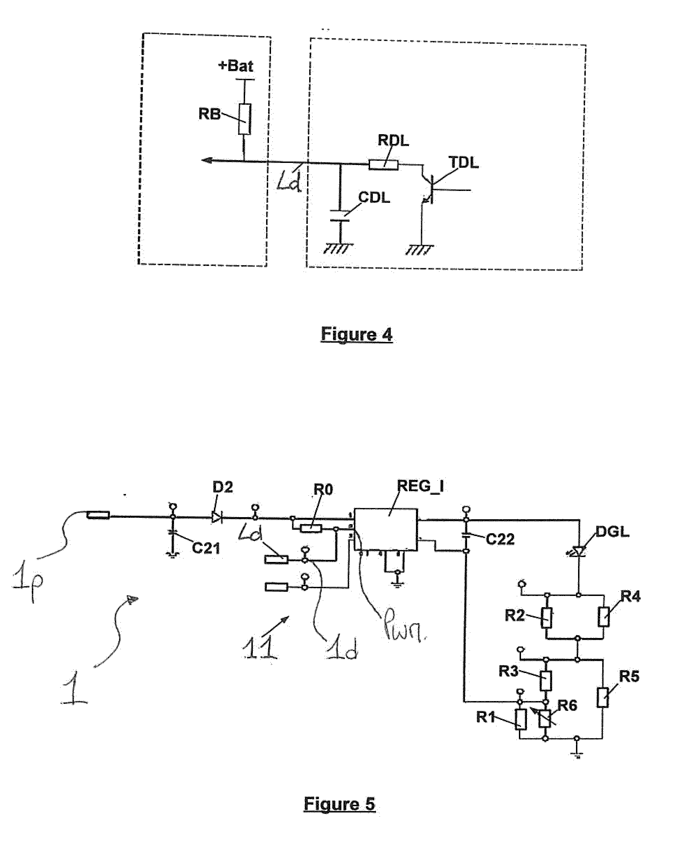

Le deuxième module 2 comporte un circuit pilote 21 qui comprend avantageusement un circuit de protection contre les phénomènes transitoires portant la référence 30, ce circuit recevant la ligne d'alimentation de puissance sur l'entrée 2p, la première ligne de commande Lc sur l'entrée 2c. Ce circuit 30 commande un circuit 31 de commande, lequel commande trois diodes électroluminescentes DRL/PL. Ces derniers sont contrôlés en température et en intensité par une jauge de température, notée T°, et par un détecteur de flux lumineux LED_D par exemple. Ces derniers permettent le contrôle de l'ensemble par l'intermédiaire d'un microcontrôleur µC lequel est alimenté par l'intermédiaire d'un régulateur de tension, noté REG_V. Le microcontrôleur précité est apte à générer un signal de commande lorsqu'il est détecté une défaillance d'un composant du deuxième module 2, par exemple sous la forme d'une chute de tension. Le microcontrôleur envoie ensuite ce signal de commande sur la deuxième ligne de commande Ld par l'intermédiaire d'un circuit d'interface, tel que représenté en figure 4.

En référence à la figure 4 précitée, on indique, à titre d'exemple non limitatif, que l'interface proprement dite comporte un transistor, noté TDL, directement commandé par le microcontrôleur µC et pilotant un circuit à résistance capacité RDL, CDL vers la deuxième ligne de commande Ld, chargée par une résistance RB, directement connectée à la tension positive + Bat de la batterie du véhicule.

Enfin, en référence à la figure 5, on a représenté un mode de mise en oeuvre non limitatif du circuit pilote 11 du premier module 1. Ce circuit pilote comprend un régulateur d'intensité par modulation d'impulsions, noté REG_I dont l'entrée de modulation d'impulsions PWM est connectée à l'entrée de commande 1d. La chute de tension sur la deuxième ligne de commande Ld provoque ainsi la désactivation du premier module 1 par interruption de l'alimentation électrique du premier module.

Sur la figure 5, les résistances R0 à R5 et les capacités électriques C21 et C22 désignent des résistances respectivement des capacités de valeur adaptée au type de régulateur d'intensité choisi, pour en assurer la polarisation et le fonctionnement, et la résistance variable R6 permet d'ajuster le point de fonctionnement du premier module 1.

## Revendications

1. Dispositif de connexion électrique pour la connexion entre une unité (M) de commande électronique et un projecteur de véhicule automobile, l'unité de commande électronique comportant au moins une sortie (Mc) de commande et une sortie (Mp) d'alimentation de puissance, le projecteur comportant au moins un premier module (1) comportant un premier circuit pilote (11) présentant au moins une entrée de puissance (1p), le premier module (1) étant apte à générer une première fonction lumineuse et un deuxième module (2) comportant un deuxième circuit pilote (21) présentant au moins une entrée de puissance (2p) et une entrée de commande (2c), le deuxième module étant apte à générer sélectivement au moins une deuxième fonction lumineuse, les premier (11) et deuxième (21) circuits pilotes étant destinés à être commandés par l'unité (M) de commande électronique, le dispositif de connexion électrique étant **caractérisé en ce qu'il** comporte au moins :
- une ligne d'alimentation de puissance (Lp) destinée à connecter la sortie (Mp) d'alimentation de puissance de l'unité (M) de commande électronique à l'entrée de puissance (1 p) du premier circuit pilote (11) et à l'entrée de puissance (2p) du deuxième circuit pilote (21) ; et
- une première ligne de commande (Lc) destinée à connecter la sortie (Mc) de commande de l'unité de commande électronique (M) à l'entrée de commande (2c) du deuxième circuit pilote (2).

2. Dispositif selon la revendication précédente, le premier circuit pilote (11) présentant une entrée (1d) de commande et le deuxième circuit pilote (21) présentant une sortie (2d) de commande, **caractérisé en ce qu'il** comporte une deuxième ligne de commande (Ld) destinée à connecter l'entrée de commande (1d) du premier circuit pilote (11) à la sortie de commande (2d) du deuxième circuit pilote (21).

3. Dispositif de pilotage destiné à piloter un projecteur de véhicule automobile, **caractérisé en ce qu'il** comporte :
- une unité (M) de commande électronique, et
- un dispositif de connexion électrique selon l'une des revendications 1 à 2.

4. Dispositif de pilotage selon la revendication 3, **caractérisé en ce qu'il** comporte des moyens de diagnostic aptes à diagnostiquer une défaillance du deuxième module (2), notamment une défaillance d'un composant électrique du deuxième module.

5. Dispositif de pilotage selon la revendication précédente, **caractérisé en ce que** les moyens de diagnostic sont intégrés à l'unité de commande électronique (M).

6. Dispositif de pilotage selon l'une des revendications 4 à 5, **caractérisé en ce que** les moyens de diagnostic sont agencés pour diagnostiquer une défaillance du deuxième module (2) en comparant une valeur caractéristique, notamment une intensité, du courant d'alimentation circulant dans la ligne d'alimentation de puissance (Lp) à au moins une valeur de référence spécifique.

7. Dispositif de pilotage selon la revendication précédente, **caractérisé en ce que** les moyens de diagnostic sont agencés pour diagnostiquer une défaillance du deuxième module (2) lorsque l'intensité du courant d'alimentation circulant dans la ligne d'alimentation de puissance (Lp) est inférieure à une valeur seuil, notamment à 25 mA.

8. Projecteur de véhicule automobile comportant :
- un premier module (1) comportant un premier circuit pilote (11) présentant au moins une entrée de puissance (1 p), le premier module (1) étant apte à générer une première fonction lumineuse,
- un deuxième module (2) comportant un deuxième circuit pilote (21) présentant au moins une entrée de puissance (2p) et une entrée de commande (2c), le deuxième module étant apte à générer sélectivement au moins une deuxième fonction lumineuse, et
- un dispositif de connexion électrique selon l'une des revendications 1 à 2, ce dispositif de connexion étant connecté aux premier et deuxième modules.

9. Projecteur selon la revendication précédente, **caractérisé en ce qu'il** comporte des moyens de gestion (µC) destinés à désactiver le premier module (1) lorsqu'il est diagnostiqué une défaillance du deuxième module (2), notamment par interruption de l'alimentation électrique du premier module.

10. Projecteur selon la revendication précédente, **caractérisé en ce que** les moyens de gestion (µC) sont intégrés au deuxième circuit pilote (21) du deuxième module (2).

11. Projecteur selon l'une des revendications 9 à 10, **caractérisé en ce que** le premier circuit pilote (11) présente une entrée (1d) de commande et le deuxième circuit pilote (21) présente une sortie (2d) de commande, **en ce qu'**il comporte une deuxième ligne de commande (Ld) reliant l'entrée (1d) du premier circuit pilote (11) à la sortie (2d) du deuxième circuit pilote (21) et **en ce que** les moyens de gestion sont aptes à générer une chute de tension sur la deuxième ligne de commande lorsqu'il est diagnostiqué une défaillance du deuxième module (2).

12. Projecteur selon la revendication précédente, **caractérisé en ce que** le premier circuit pilote (11) du premier module (1) comporte au moins :
- un circuit régulateur de courant (REG_I) comportant une entrée de modulation d'impulsions (PWM);
- une ligne de connexion entre l'entrée de commande (1d) du premier circuit pilote (11) et l'entrée de modulation d'impulsions (PWM) du régulateur, la chute de tension sur la deuxième ligne de commande (Ld) provoquant la désactivation du premier module, notamment par interruption de l'alimentation électrique du premier module.

13. Projecteur selon l'une des revendications 8 à 12, **caractérisé en ce que** le premier module et/ou le deuxième module comporte au moins une diode électroluminescente.

14. Projecteur selon l'une des revendications 8 à 13, **caractérisé en ce que** la première fonction lumineuse est une fonction de style.

15. Projecteur selon l'une des revendications 8 à 14, **caractérisé en ce que** la deuxième fonction lumineuse est une fonction d'éclairage et/ou de signalisation prédéterminée, notamment un feu de position diurne.

16. Projecteur selon la revendication précédente, **caractérisé en ce que** le deuxième module (2) est apte à générer une troisième fonction lumineuse, cette troisième fonction étant une fonction d'éclairage et/ou de signalisation prédéterminée, distincte de la deuxième fonction lumineuse, notamment un feu de position.

17. Projecteur selon l'une des revendications 8 à 16, **caractérisé en ce qu'il** comporte une unité de commande électronique (M) connectée au dispositif de connexion électrique.
